# EUROPÄISCHE PATENTSCHRIFT

(11) **EP 3 741 492 B1**
(45) Veröffentlichungstag und Bekanntmachung des Hinweises auf die Patenterteilung: **24.04.2024**
(21) Anmeldenummer: 19176147.7
(22) Anmeldetag: 23.05.2019
(51) Int. Cl.: B23K 9/32, B23K 26/14

(54) **SCHLEPPGASDÜSE**
CARRIER GAS NOZZLE
BUSE DE GAZ VECTEUR

(43) Veröffentlichungstag der Anmeldung: 25.11.2020
(73) Patentinhaber: FRONIUS INTERNATIONAL GmbH, 4643 Pettenbach (AT)
(72) Erfinder: SCHÜTZENBERGER, Andreas, 4643 Pettenbach (AT); LUGMAYR, Andreas, 4643 Pettenbach (AT); HAUSER, Patrick, 4643 Pettenbach (AT)
(74) Vertreter: SONN Patentanwälte GmbH & Co KG

(56) Entgegenhaltungen:
- CN-A- 108 608 094
- DE-A1-102016 220 509
- GB-A- 992 906
- US-A- 3 125 666
- US-A- 4 599 505

## Beschreibung

Die Erfindung betrifft eine Schleppgasdüse zur Beaufschlagung eines Schweißbereichs mit einem Schutzgas, mit einem Gehäuse, einer Einrichtung zur Befestigung an einem Schweißbrenner, einem Einlass für das Schutzgas, zumindest einem Gasverteilraum und einer Vielzahl an parallel angeordneten Gaskanälen mit Öffnungen, über welche das Schutzgas auf den Schweißbereich strömt.

Bei den meisten Schweißverfahren wird zur Erhöhung der Stabilität des Schweißprozesses ein Schutzgas verwendet, welches über die Gasdüse zum Schutz des Lichtbogens zugeführt wird. Dieses Schutzgas wird auch als primäres Schutzgas bezeichnet. Zum Schutz der nachlaufenden Schmelze vor Luftzutritt werden teilweise Schleppgasdüsen der gegenständlichen Art verwendet, über die zusätzlich Schutzgas über den Schweißbereich strömt, um eine Reaktion des geschmolzenen Materials mit dem Sauerstoff in der umgebenden Luft zu verhindern und die Schweißqualität zu verbessern. Bei derartigen Schleppgasdüsen angewendetes Schutzgas wird auch als sekundäres Schutzgas bezeichnet. Speziell bei einer Bearbeitung von Werkstücken aus legierten Stählen, Aluminiumlegierungen oder Titan, etc. ist die Anwendung eines sekundären Schutzgases für die Erzielung guter Schweißergebnisse erforderlich, da derartige Materialien stark mit Sauerstoff reagieren. Beispielsweise reagiert Titan bei Temperaturen bis 300°C mit Sauerstoff, weshalb hier eine Schutzatmosphäre erforderlich ist. Sowohl als primäres als auch als sekundäres Schutzgas kommt beispielsweise Argon zur Anwendung.

Bei kleineren Bauteilen aus den oben genannten Materialien kann der Schweißprozess auch in Gaskammern vorgenommen werden, um die Schweißnaht oder den Schweißbereich (beispielsweise beim Auftragsschweißen und beim sogenannten Wire Arc Additive Manufacturing WAAM) vor Luftzutritt und Oxidation zu schützen. Das Schweißen in einer Gaskammer ist allerdings sehr aufwendig und auch mit einem sehr hohen Verbrauch an Schutzgas verbunden. Darüber hinaus ist das Schweißen größerer Werkstücke, wie zum Beispiel von Flugzeug-Komponenten, in Gaskammern nicht möglich bzw. mit einem sehr großen Aufwand verbunden.

Über Schleppgasdüsen wird das sekundäre Schutzgas in geeigneter Weise auf den nachlaufenden Schweißbereich aufgebracht, bis das Werkstück bzw. der Schweißbereich unterhalb der kritischen Temperatur, bei welcher eine Reaktion des jeweiligen Materials mit Sauerstoff stattfindet, abgekühlt ist. Für eine gleichmäßige Anströmung des Werkstücks mit dem Schutzgas werden Schleppgasdüsen mit beispielsweise porösen Materialien, wie Schäumen, Sinterwerkstoffen oder Gassieben verwendet. Derartige Systeme sind durch lange Spülzeiten und hohen Gasverbrauch gekennzeichnet, zudem können die porösen Materialien keinen ausreichend erforderlichen Gasschutz erzeugen. Ruß und/oder Schweißspritzer setzen den porösen Materialien zu und verhindern damit den Einsatz bei verschiedenen Schweißprozessen. Oft werden auch Schleppgasdüsen eingesetzt, welche durch ein oder mehrere hintereinander angeordneter Gasröhrchen den Schweißbereich mit zusätzlichem Schutzgas versorgen.

Die Schleppgasdüse gemäß der US 4,599,505 A beinhaltet eine poröse Struktur für eine gute Verteilung des Schutzgases über den Schweißbereich. Die relativ kleinen Öffnungen an der Unterseite der Schleppgasdüse werden jedoch durch Verschmutzungen relativ leicht verlegt, wodurch keine gleichmäßige Gasströmung erzielt werden kann.

Die DE 10 2016 220 509 A1 beschreibt eine Schleppgasdüse der gegenständlichen Art, wobei das Schutzgas über einen Gasverteilraum über eine Vielzahl an parallel angeordneten Gaskanälen auf den zu schützenden Schweißbereich strömt. In den relativ kurzen Gaskanälen treten Turbulenzen in der Strömung des Schutzgases auf, welche keine optimale und gleichmäßige Verteilung des Schutzgases über den zu schützenden Schweißbereich bei gleichzeitig möglichst geringem Schutzgasverbrauch zulassen.

Die CN 108608094 A beschreibt eine Schleppgasdüse, bei der das Schutzgas über Einlässe in eine Dekompressionskammer gelangt und nach einem Sieb mit unregelmäßig angeordneten Löchern in einer Kammer mündet. Die Kammer wird durch ein schräg verlaufendes Ableitblech begrenzt, wodurch der Querschnitt zur Mündung hin größer wird. Durch die Kammer kann keine gleichmäßige Gasströmung an der Mündung der Schleppgasdüse erzielt und können Verwirbelungen nicht verhindert werden.

Die GB 992 906 A beschreibt eine Schutzgasdüse zur Verwendung beim Schweißen, wobei über das Schutzgas über zwei Zuleitungen in Kanäle geströmt wird, welche durch gewellt angeordnete Lamellen gebildet werden. Dadurch kann ein Schutzgasvorhang um die Schweißstelle und hinter der Schweißstelle gebildet werden, der die Schweißnaht vor Oxidation schützt. Über die geometrischen Verhältnisse der Gaskanäle werden keine Angaben gemacht. Auch ist die Konstruktion sehr aufwändig und komplex.

Die Aufgabe der vorliegenden Erfindung besteht in der Schaffung einer oben genannten Schleppgasdüse, welche eine optimale und gleichmäßige Verteilung des Schutzgases über den zu schützenden Schweißbereich bei gleichzeitig möglichst geringem Verbrauch an Schutzgas ermöglicht. Die Herstellung der Schleppgasdüse soll möglichst einfach und kostengünstig möglich sein. Nachteile bekannter Schleppgasdüsen sollen vermieden oder zumindest reduziert werden.

Gelöst wird die erfindungsgemäße Aufgabe dadurch, dass jeder Gaskanal eine Höhe aufweist, welche zumindest dem Sechsfachen des hydraulischen Durchmessers des Gaskanals entspricht, und dass in den Gaskanälen Elemente zur gleichmäßigen Verteilung der Strömung des Schutzgases auf alle Gaskanäle angeordnet sind. Beim hydraulischen Durchmesser handelt es sich um eine Größe, die zur Berechnung des Druckverlusts und Durchsatzes in Kanälen herangezogen werden kann, wenn der Querschnitt des Kanals von der Kreisform abweicht. Dadurch, dass die Gaskanäle der gegenständlichen Schleppgasdüse im Verhältnis zu ihrem Querschnitt lang genug sind, wird eine optimale Strömung und Schutzgasverteilung erzielt und eine Laminarisierung der Schutzgasströmung innerhalb der Gaskanäle bei gleichzeitig relativ geringem Verbrauch an Schutzgas erreicht. Durch die in den Gaskanälen angeordneten Elemente zur Verteilung der Strömung des Schutzgases, kann eine besonders gleichmäßige Verteilung des Schutzgases auf alle Gaskanäle und somit eine optimale Anströmung des zu schützenden Schweißbereichs erzielt werden. Somit wird der von der Schleppgasdüse abgedeckte Schweißbereich optimal vor Luftzutritt geschützt und es resultiert eine Schweißnaht bzw. eine Werkstückoberfläche mit optimalen Eigenschaften und höchster Qualität. Durch eine optimal gestaltete Schleppgasdüse, können Schweißverfahren, welche bisher in Gaskammern ausgeführt werden mussten, auch außerhalb einer solchen stattfinden. Dadurch resultiert eine höhere Flexibilität und es eröffnen sich neue Anwendungsmöglichkeiten. Darüber hinaus können die Fertigungskosten auch durch den niedrigeren Verbrauch an sekundärem Schutzgas erheblich gesenkt werden. Dadurch, dass eine gleichmäßige Schutzgasströmung erzielt wird, kann auf zusätzliche verschleißende Einrichtungen, wie Siebe, Lippen oder Vorhänge, welche den zu schützenden Schweißbereich abschirmen sollen, verzichtet werden, wodurch keine Wartungsarbeiten an der Schleppgasdüse anfallen.

Gemäß einem weiteren Merkmal der Erfindung sind die Gaskanäle über Löcher mit dem zumindest einen Gasverteilraum verbunden. Durch derartige Löcher werden also die Gaskanäle mit dem Gasverteilraum oder den Gasverteilräumen optimal verbunden und eine gleichmäßige Verteilung des Schutzgases in allen Gaskanälen erzielt. Die Löcher weisen vorzugsweise aber nicht gezwungenerma-ßen runden Querschnitt auf. Beispielsweise kann die Gasverteilung auch nach einem Stufenkonzept erfolgen, indem das Schutzgas über den Einlass in einen ersten Gasverteilraum gelangt und über entsprechende Löcher bzw. Verbindungsbohrungen in einen zweiten Gasverteilraum weitergeleitet wird, bevor das Schutzgas über entsprechende Löcher auf alle Gaskanäle aufgeteilt wird. Durch eine derartige Kaskadierung resultiert eine optimale und gleichmäßige Aufteilung des Schutzgases auf alle Gaskanäle. Die Anzahl der Stufen bzw. Gasverteilräume hängt vom hydraulischen Durchmesser der Gaskanäle, der Länge der Gaskanäle und der Anzahl an Einlässen für das Schutzgas ab.

Die Löcher zur Verbindung der Gaskanäle mit dem zumindest einen Gasverteilraum weisen vorzugsweise einen Durchmesser zwischen 0,2 mm und 5 mm, insbesondere zwischen 0,5 mm und 1 mm, auf. Derartige Werte stellen einen optimalen Kompromiss zwischen geringem Schutzgasverbrauch und optimaler Gasverteilung dar.

Die Elemente zur gleichmäßigen Verteilung der Strömung des Schutzgases können durch einen Diffusor gebildet sein, welcher in einem Teil des Querschnitts des Gaskanals angeordnet ist. Ein derartiger Diffusor sorgt dafür, dass die hohe kinetische Energie des Schutzgases, welche durch die Löcher verursacht wird, reduziert wird, indem die Strömung im Diffusor entsprechend abgelenkt wird. Beispielsweise prallt die Gasströmung in einem Diffusor an eine Wand und wird seitlich durch entsprechende Schlitze in die Gaskanäle abgelenkt. Durch die Umlenkung der Gasströmung wird die kinetische Energie abgebaut und die Strömung wird turbulent durchmischt und somit besser auf den Querschnitt der Gaskanäle aufgeteilt. In den parallelen Gaskanälen wird die turbulente Strömung laminarisiert, bevor ein gleichmä-ßiger Gasstrom über die Öffnungen der Gaskanäle auf den zu schützenden Schweißbereich auftrifft. Durch einen derartigen Diffusor kann auch die Anzahl der notwendigen Löcher zur Verbindung des Gasverteilraums mit den Gaskanälen reduziert werden. Dadurch verringert sich die durchströmte Gesamtfläche der Löcher und es entsteht im Gasverteilraum ein höherer Gegendruck, was eine noch gleichmäßigere Verteilung des Schutzgases auf alle Löcher bewirkt.

Wenn die Einrichtung zur Befestigung der Schleppgasdüse an einem Schweißbrenner schwenkbar ist, kann die Schleppgasdüse bei Nichtbenutzung einfach weggeschwenkt werden oder eine schnelle Anpassung der Lage der Schleppgasdüse in Bezug auf den Schweißbereich bzw. das Werkstück vorgenommen werden. Zur raschen Fixierung der Schleppgasdüse in Bezug auf den Schweißbrenner können entsprechende Fixierungselemente vorgesehen sein, welche insbesondere eine werkzeuglose manuelle Fixierung und Lösung erlauben.

Wenn im Gehäuse zumindest ein Kühlkanal zwischen einem Kühlmitteleinlass und einem Kühlmittelauslass angeordnet ist, kann eine wirkungsvolle Kühlung der Schleppgasdüse mit entsprechenden Kühlmedien, insbesondere Kühlwasser, vorgenommen werden.

Vorzugsweise sind das Gehäuse der Schleppgasdüse, der Einlass für das Schutzgas, der zumindest eine Gasverteilraum, die Gaskanäle, die Elemente zur gleichmäßigen Verteilung der Strömung des Schutzgases und allenfalls der Kühlkanal einteilig und vorzugsweise in einem 3D-Druckverfahren hergestellt. Dadurch kann die Schleppgasdüse rasch und kostengünstig hergestellt werden.

Das Gehäuse, der Einlass für das Schutzgas, der zumindest eine Gasverteilraum, die Gaskanäle, die Elemente zur gleichmäßigen Verteilung der Strömung des Schutzgases und allenfalls der Kühlkanal können beispielsweise aus einer Aluminium-Legierung hergestellt sein. Auch Kupfer oder eine Kupfer-Legierungen eignet sich zur Herstellung der Schleppgasdüse.

Die Gaskanäle der Schleppgasdüse weisen vorzugsweise quadratischen oder sechseckigen Querschnitt auf. Durch eine solche Gestaltung folgt eine regelmäßige Wandstärke zwischen den Gaskanälen, was zu einer gleichmäßigen Wärmeabfuhr führt und herstellungsmäßig Vorteile bietet.

Das Gehäuse der Schleppgasdüse kann im Wesentlichen rechteckige Grundfläche aufweisen, wobei die Einrichtung zur Befestigung des Schweißbrenners an einer Breitseite des rechteckigen Gehäuses angeordnet ist. Diese Variante bietet insbesondere zum Schutz von im Wesentlichen geraden Schweißnähten Vorteile.

Alternativ dazu kann das Gehäuse der Schleppgasdüse auch im Wesentlichen runde oder kreissektorförmige Grundfläche aufweisen und die Einrichtung zur Befestigung des Schweißbrenners im Wesentlichen in der Mitte des Gehäuses angeordnet sein. Diese Ausführungsvariante ist insbesondere beim Auftragsschweißen (Wire Arc Additive Manufacturing WAAM) von Vorteil, da hier ein flächigerer Schweißbereich vor Luftzutritt geschützt wird.

Die Öffnungen aller Gaskanäle der Schleppgasdüse können in einer Ebene angeordnet sein, was sich für die Anwendung bei im Wesentlichen ebenen Schweißbereichen und Werkstücken besonders eignet.

Wenn die Öffnungen aller Gaskanäle der Schleppgasdüse auf einer gekrümmten Fläche angeordnet sind, kann ein optimaler Schutz des Schweißbereichs auch bei nicht ebenen Werkstücken, beispielsweise Rohren, Formrohren, Kesseln, etc. erzielt werden. Die Krümmung der Schleppgasdüse wird dabei an die Krümmung des Schweißbereichs bzw. Werkstücks entsprechend angepasst.

Die vorliegende Erfindung wird anhand der beigefügten Zeichnungen näher erläutert. Darin zeigen:
- Fig. 1: eine perspektivische Ansicht auf eine Ausführungsform einer rechteckigen Schleppgasdüse;
- Fig. 2: eine Draufsicht auf die Schleppgasdüse gemäß Fig. 1;
- Fig. 3: einen Schnitt durch die Schleppgasdüse gemäß Fig. 2 entlang der Schnittlinien III-III;
- Fig. 4: einen Schnitt durch die Schleppgasdüse gemäß Fig. 2 entlang der Schnittlinie IV-IV;
- Fig. 5: eine Ansicht auf die Schleppgasdüse mit quadratischem Querschnitt der Gaskanäle von unten;
- Fig. 6: das Detail A aus Fig. 4 in vergrößerter Darstellung zur Veranschaulichung der Elemente zur Verteilung der Strömung des Schutzgases in den Gaskanälen; und
- Fig. 7: eine Ansicht auf eine runde Schleppgasdüse mit sechseckigem Querschnitt der Gaskanäle und mit mittig angeordnetem Schweißbrenner von unten.

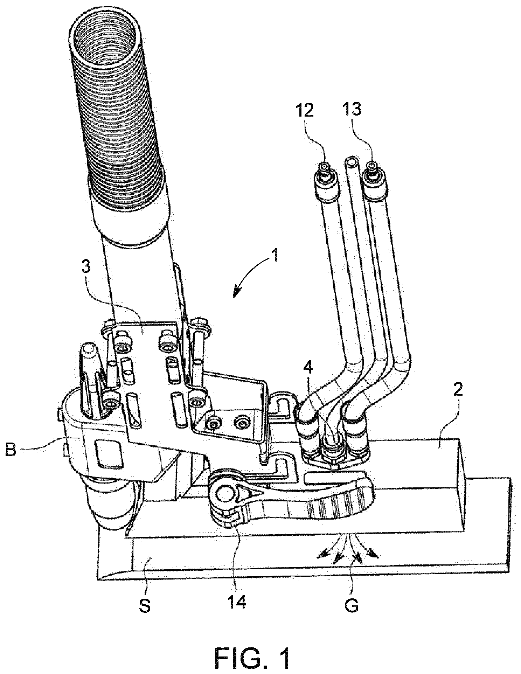

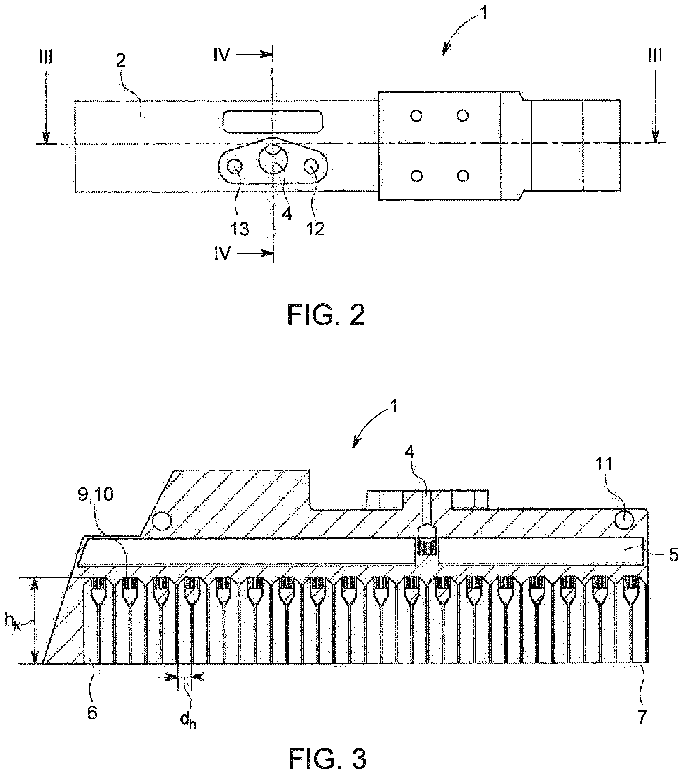

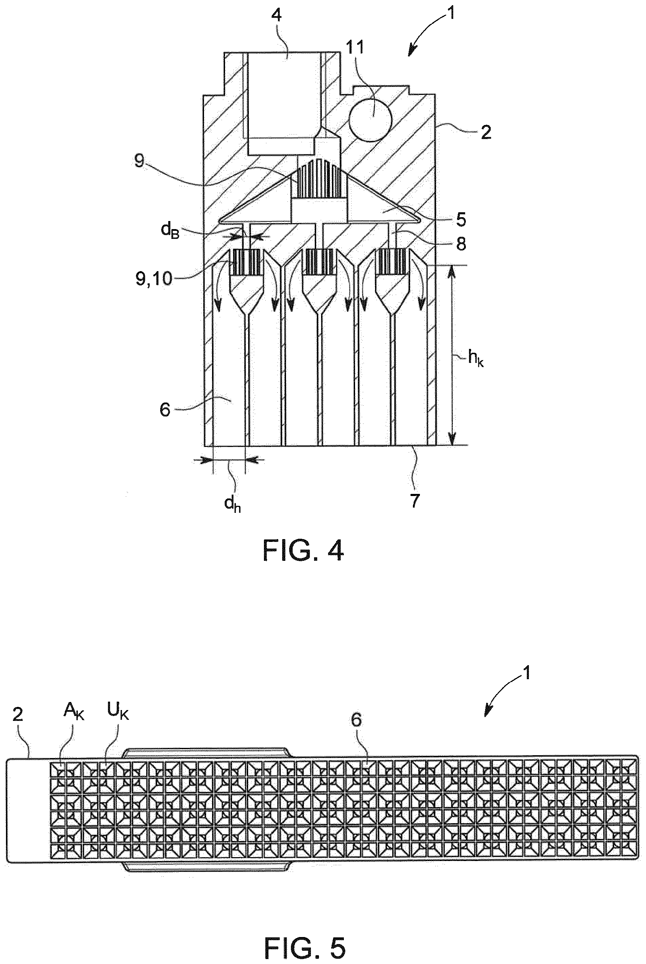

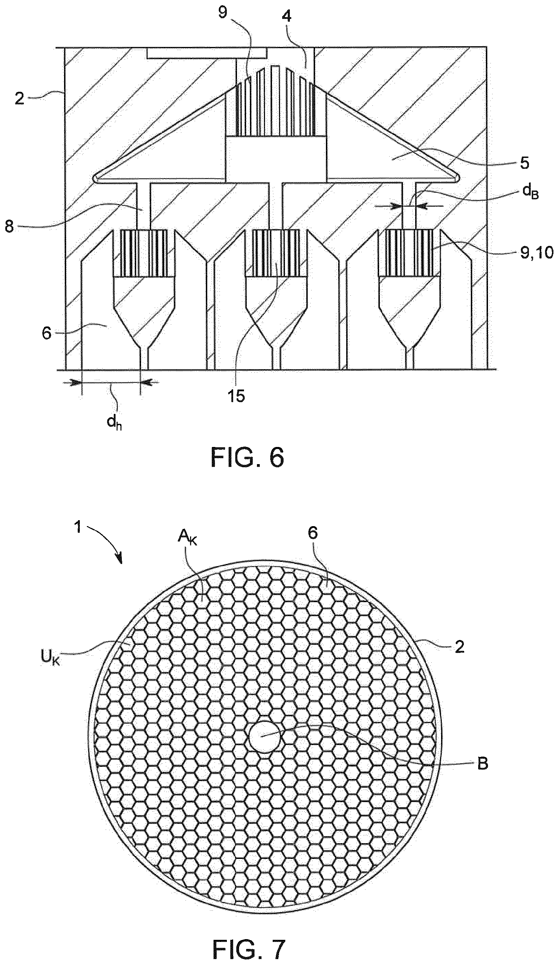

Fig. 1 zeigt eine perspektivische Ansicht auf eine Ausführungsform einer rechteckigen Schleppgasdüse 1 zur Beaufschlagung eines Schweißbereichs S mit einem Schutzgas G. Die Schleppgasdüse 1 weist ein Gehäuse 2 und eine Einrichtung 3 zur Befestigung an einem Schweißbrenner B auf. Zur Vornahme einer schnellen Justierung der Schleppgasdüse 1 in Bezug auf den Schweißbrenner B kann die Einrichtung 3 auch schwenkbar ausgebildet sein, um die Schleppgasdüse 1 aus der Gebrauchslage bringen zu können. Dadurch kann beispielsweise in einer Schweißstartphase zur Qualitätskontrolle die Prozessstabilität beurteilt werden. Zur Fixierung der Schleppgasdüse 1 in der jeweiligen Stellung kann ein entsprechendes Fixierelement 14 vorgesehen sein. Während des Schweißprozesses wird der nachlaufende Schweißbereich S von der Schleppgasdüse 1 überdeckt, wodurch der Schweißbereich S vor Luftzutritt geschützt wird, um eine optimale Qualität der Schweißnaht oder der Schweißfläche erzielen zu können. Die Länge der Schleppgasdüse 1 wird dabei so gewählt, dass bei gewünschter Schweißgeschwindigkeit gewährleistet wird, dass der Schweißbereich S so lange von Schutzgas G umströmt wird, bis die kritische Temperatur des Schweißbereichs S, bei der eine Reaktion mit Luftsauerstoff stattfindet, unterschritten ist. Die Schleppgasdüse 1 weist weiters einen Einlass 4 für das Schutzgas G, zumindest einen Gasverteilraum 5 und eine Vielzahl an parallel angeordneten Gaskanälen 6 mit Öffnungen 7, über welche das Schutzgas G auf den Schweißbereich S strömt, auf (siehe Fig. 3). Anstelle einer rechteckigen Form der Schleppgasdüse 1 in Draufsicht, kommen auch runde (siehe Fig. 7) oder andere Formen in Frage. Die Schleppgasdüse 1 kann auch einen Kühlkanal 11 (siehe Fig. 3 und 4) beinhalten, der zwischen einem Kühlmitteleinlass 12 und einem Kühlmittelauslass 13 im Gehäuse 2 angeordnet ist.

Vorteilhafterweise ist die Schleppgasdüse 1 einteilig ausgeführt und bevorzugt in einem 3D-Druckverfahren hergestellt. Beispielsweise eignet sich dafür ein Lasersinterverfahren, bei dem das Material, insbesondere eine Aluminiumlegierung pulverförmig vorliegt und durch einen Laser aufgeschmolzen wird. Auf diese Weise kann die erfindungsgemäße Schleppgasdüse 1 besonders kostengünstig hergestellt werden und die Geometrie der einzelnen Elemente lässt sich dadurch leicht anpassen. Sämtliche Elemente der Schleppgasdüse 1, wie das Gehäuse 2, der Einlass 4 für das Schutzgas G, der zumindest eine Gasverteilraum 5, die Gaskanäle 6, Elemente 9 zur gleichmäßigen Verteilung der Strömung des Schutzgases G (siehe Fig. 3, 4 und 6) und allenfalls ein Kühlkanal 11 (siehe Fig. 3 und 4) werden in einem Vorgang hergestellt.

Fig. 2 zeigt eine Draufsicht auf die Schleppgasdüse 1 gemäß Fig. 1. Neben dem Einlass 4 für das Schutzgas G befindet sich auch ein Kühlmitteleinlass 12 und ein Kühlmittelauslass 13 am Gehäuse 2, zwischen denen zumindest ein entsprechender Kühlkanal 11 in geeigneter Weise angeordnet ist (siehe Fig. 3 und 4). Über ein im Kühlkanal 11 geführtes Kühlmedium, insbesondere Kühlwasser, kann die beim Schweißprozess anfallende Wärme rasch abgeführt werden und eine raschere Abkühlung des Schweißbereichs S unterstützt werden.

Fig. 3 zeigt einen Schnitt durch die Schleppgasdüse 1 gemäß Fig. 2 entlang der Schnittlinien III-III. Erfindungsgemäß weist jeder Gaskanal 6 eine Höhe h_{K} auf, welche dem Sechsfachen des hydraulischen Durchmessers dₕ des Gaskanals 6 entspricht. Dadurch wird eine optimale laminare Gasströmung bei gleichzeitig geringem Verbrauch an Schutzgas erzielt.

Erfindungsgemäß ist das Verhältnis der Höhe h_{K} des Gaskanals 6 zum hydraulischen Durchmesser dₕ mindestens sechs. Der hydraulische Durchmesser dₕ ist bei einem quadratischen Querschnitt A_{K} des Gaskanals 6 definiert durch dₕ = (4.A_{K})/U_{K}, worin A_{K} den Strömungsquerschnitt des Gaskanals 6 und U_{K} den Umfang des Gaskanals 6 bezeichnet. Ein derartiges Verhältnis reicht aus, um die Gasströmung innerhalb den Gaskanälen entsprechend zu beruhigen, sodass an den Öffnungen 7 der Gaskanäle 6 eine gleichmäßige, laminare Strömung des Schutzgases G resultiert. Entsprechend der jeweiligen Anwendung wird die Größe der Schleppgasdüse 1 und auch die Anzahl n der Gaskanäle 6 gewählt.

Im dargestellten Ausführungsbeispiel der Schleppgasdüse gemäß den Figuren 1 bis 3 sind die Öffnungen 7 aller Gaskanäle 6 in einer Ebene angeordnet, was sich für eine Anwendung an einem im Wesentlichen ebenen Werkstück besonders eignet. Alternativ dazu können die Öffnungen 7 der Gaskanäle 6 auch auf einer gekrümmten Fläche angeordnet sein. Dadurch kann die Form der Schleppgasdüse 1 an die Form des Werkstücks angepasst werden. Beispielsweise beim Schweißen eines Rohres kann die Schleppgasdüse 1 konkav oder konvex gekrümmt ausgebildet sein, um eine Anpassung an die Außen- oder Innenfläche des Rohres erzielen zu können (nicht dargestellt). Dadurch wird der Schweißbereich S optimal durch das Schutzgas G geschützt und eine optimale Schweißqualität auch bei heiklen Materialien, wie insbesondere Titan, erzielt.

Fig. 4 zeigt einen Schnitt durch die Schleppgasdüse 1 gemäß Fig. 2 entlang der Schnittlinie IV-IV. Hieraus ist die Verbindung des Einlasses 4 für das Schutzgas G in den Gasverteilraum 5 ersichtlich. Um das vom Einlass 4 einströmende Schutzgas G optimal im Gasverteilerraum 5 verteilen zu können, ist zusätzlich ein Element 9 zur gleichmäßigen Verteilung des Schutzgases G im Gasverteilerraum 5 angeordnet. Dieses Element 9 lenkt das vertikal einströmende Schutzgas G in horizontale Richtung um, wodurch eine horizontale Strömung entsteht, wodurch die Verteilung des Schutzgases G im Gasverteilerraum 5 wesentlich verbessert wird. Der Gasverteilraum 5 hat im Wesentlichen dreieckigen Querschnitt, was eine Herstellung in einem 3D-Druckverfahren unterstützt, da auf sonst allenfalls notwendige Stützstrukturen verzichtet werden kann. Durch den dreieckigen Aufbau des Gasverteilerraums 5 kann zusätzlich ein Kühlkanal 11 angeordnet sein, wobei sich trotzdem noch eine kompakte Baugröße realisieren lässt. Vom Gasverteilraum 5 führen Löcher 8 in die parallelen Gaskanäle 6. Die Löcher 8 weisen bevorzugt einen Durchmesser d_{B} zwischen 0,2 mm und 5 mm, insbesondere zwischen 0,5 mm und 1 mm, auf. In den Gaskanälen 6 sind Elemente 9 zur gleichmäßigen Verteilung der Strömung des Schutzgases G angeordnet. Diese Elemente 9 zur gleichmäßigen Verteilung des Schutzgases G können durch einen Diffusor 10 gebildet sein, welcher in einem Teil des Querschnitts A_{K} des Gaskanals 6 angeordnet ist (siehe Fig. 6). Wie bereits oben erwähnt, kann die Verteilung des Schutzgases G auch in mehreren Stufen erfolgen, indem das Schutzgas G über den Einlass 4 in einen ersten Gasverteilraum 5 gelangt und über entsprechende Löcher 8 in einen zweiten Gasverteilraum oder mehrere zweite Gasverteilräume weitergeleitet wird, bevor das Schutzgas G über entsprechende Löcher auf alle Gaskanäle 6 aufgeteilt wird (nicht dargestellt). Durch eine derartige Kaskadierung resultiert eine optimale und gleichmäßige Aufteilung des Schutzgases G auf alle Gaskanäle 6 und somit eine gleichmäßige Strömung des Schutzgases G durch die Öffnungen 7.

Fig. 5 zeigt eine Ansicht auf die Schleppgasdüse 1 mit quadratischem Querschnitt A_{K} und Umfang U_{K} der Gaskanäle 6 von unten. Durch eine derartige Gestaltung resultieren zwischen den Gaskanälen gleichmäßige Wandstärken, was Vorteile bei der Herstellung der Schleppgasdüse 1, insbesondere bei einem 3D-Druckverfahren bietet. Auch für die Wärmeabfuhr haben derartige gleichmäßige Strukturen Vorteile.

Fig. 6 zeigt das Detail der Gasverteilung der Schleppgasdüse 1 gemäß Fig. 4 in vergrößerter Darstellung zur Veranschaulichung der Elemente 9 zur gleichmäßigen Verteilung der Strömung des Schutzgases G in den Gaskanälen 6. Vom Gasverteilraum 5 der Schleppgasdüse 1 führen senkrecht angeordnete Löcher 8 in die parallelen Gaskanäle 6. Die Löcher 8 weisen bevorzugt einen Durchmesser d_{B} zwischen 0,2 mm und 5 mm, insbesondere zwischen 0,5 mm und 1 mm, auf. Die Elemente 9 zur gleichmäßigen Verteilung des Schutzgases G sind in dieser möglichen Ausführungsform durch einen Diffusor 10 gebildet. Ein derartiger Diffusor 10 sorgt dafür, dass die hohe kinetische Energie des Schutzgases G, welche durch die senkrecht angeordneten Löcher 8 verursacht wird, reduziert wird, indem die Strömung im Diffusor 10 entsprechend abgelenkt wird (siehe Pfeile). Dabei prallt das Schutzgas G im Diffusor 10 an eine waagrecht angeordnete Bodenwand des Diffusors 10 und wird seitlich durch entsprechende Schlitze 15 in die Gaskanäle 6 abgelenkt, wodurch die kinetische Energie abgebaut und die Strömung turbulent durchmischt und besser auf den Querschnitt A_{K} der Gaskanäle 6 aufgeteilt wird. In einer bevorzugten Ausführungsform ist der Diffusor 10 in Draufsicht im Mittelpunkt von vier Gaskanälen 6 angeordnet, wodurch eine symmetrische Aufteilung der Strömung auf alle vier Gaskanäle 6 erreicht werden kann. Der Diffusor 10 weist bevorzugt einen Durchmesser von kleiner 2 cm auf. Die entsprechenden Schlitze 15 sind gleichmäßig auf jeden Gaskanal 6 aufgeteilt. Pro Diffusor 10 können zwischen vier und sechszehn Schlitze 15 angeordnet sein. In den parallelen Gaskanälen 6 wird die turbulente Strömung dann laminarisisert, bevor ein gleichmäßiger Strom des Schutzgases G über die Öffnungen 7 der Gaskanäle 6 auf den zu schützenden Schweißbereich S auftrifft.

Fig. 7 zeigt eine Ansicht auf eine Schleppgasdüse 1 mit rundem Gehäuse 2 und mit sechseckigem Querschnitt A_{K} und entsprechendem Umfang U_{K} der Gaskanäle 6 und mit mittig angeordnetem Schweißbrenner B (nicht dargestellt) von unten. Wie bei den quadratischen Gaskanälen 6 gemäß Fig. 5 resultieren auch hier regelmäßige Wandstärken zwischen den Gaskanälen 6. Eine derartige Konstruktion eignet sich insbesondere beim Auftragsschweißen besonders, wo ein größerer flächiger Schweißbereich S vom Schutzgas G angeströmt werden soll. Auch andere Formen in der Draufsicht sind natürlich denkbar.

## Patentansprüche

1. Schleppgasdüse (1) zur Beaufschlagung eines Schweißbereichs (S) mit einem Schutzgas (G), mit einem Gehäuse (2), einer Einrichtung (3) zur Befestigung an einem Schweißbrenner (B), einem Einlass (4) für das Schutzgas (G), zumindest einem Gasverteilraum (5) und einer Vielzahl an parallel angeordneten Gaskanälen (6) mit Öffnungen (7), über welche das Schutzgas (G) auf den Schweißbereich (S) strömt, **dadurch gekennzeichnet, dass** jeder Gaskanal (6) eine Höhe (h_{K}) aufweist, welche zumindest dem Sechsfachen des hydraulischen Durchmessers (dₕ) des Gaskanals (6) entspricht, und dass in den Gaskanälen (6) Elemente (9) zur gleichmäßigen Verteilung der Strömung des Schutzgases (G) auf alle Gaskanäle (6) angeordnet sind.

2. Schleppgasdüse (1) nach Anspruch 1, **dadurch gekennzeichnet, dass** die Gaskanäle (6) über Löcher (8) mit dem zumindest einen Gasverteilraum (5) verbunden sind.

3. Schleppgasdüse (1) nach Anspruch 2, **dadurch gekennzeichnet, dass** die Löcher (8) einen Durchmesser (d_{B}) zwischen 0,2 mm und 5 mm, insbesondere zwischen 0,5 mm und 1 mm, aufweisen.

4. Schleppgasdüse (1) nach einem der Ansprüche 1 bis 3, **dadurch gekennzeichnet, dass** die Elemente (9) zur gleichmäßigen Verteilung der Strömung des Schutzgases (G) durch einen Diffusor (10) gebildet sind, welcher in einem Teil des Querschnitts (A_{K}) des Gaskanals (6) angeordnet ist.

5. Schleppgasdüse (1) nach einem der Ansprüche 1 bis 4, **dadurch gekennzeichnet, dass** die Einrichtung (3) zur Befestigung an einem Schweißbrenner (B) schwenkbar ist.

6. Schleppgasdüse (1) nach einem der Ansprüche 1 bis 5, **dadurch gekennzeichnet, dass** im Gehäuse (2) zumindest ein Kühlkanal (11) zwischen einem Kühlmitteleinlass (12) und einem Kühlmittelauslass (13) angeordnet ist.

7. Schleppgasdüse (1) nach einem der Ansprüche 1 bis 6, **dadurch gekennzeichnet, dass** das Gehäuse (2), der Einlass (4) für das Schutzgas (G), der zumindest eine Gasverteilraum (5), die Gaskanäle (6), die Elemente (9) zur gleichmäßigen Verteilung der Strömung des Schutzgases (G) und allenfalls der Kühlkanal (11) einteilig und vorzugsweise in einem 3D-Druckverfahren hergestellt sind.

8. Schleppgasdüse (1) nach einem der Ansprüche 1 bis 7, **dadurch gekennzeichnet, dass** das Gehäuse (2), der Einlass (4) für das Schutzgas (G), der zumindest eine Gasverteilraum (5), die Gaskanäle (6), die Elemente (9) zur gleichmäßigen Verteilung der Strömung des Schutzgases (G) und allenfalls der Kühlkanal (11) aus einer Aluminium-Legierung hergestellt sind.

9. Schleppgasdüse (1) nach einem der Ansprüche 1 bis 8, **dadurch gekennzeichnet, dass** die Gaskanäle (6) quadratischen oder sechseckigen Querschnitt (A_{K}) aufweisen.

10. Schleppgasdüse (1) nach einem der Ansprüche 1 bis 9, **dadurch gekennzeichnet, dass** das Gehäuse (2) im Wesentlichen rechteckige Grundfläche aufweist und die Einrichtung (3) zur Befestigung des Schweißbrenners (B) an einer Breitseite des rechteckigen Gehäuses (2) angeordnet ist.

11. Schleppgasdüse (1) nach einem der Ansprüche 1 bis 9, **dadurch gekennzeichnet, dass** das Gehäuse (2) im Wesentlichen runde oder kreissektorförmige Grundfläche aufweist und die Einrichtung (3) zur Befestigung des Schweißbrenners (B) im Wesentlichen in der Mitte des Gehäuses (2) angeordnet ist.

12. Schleppgasdüse (1) nach einem der Ansprüche 1 bis 11, **dadurch gekennzeichnet, dass** die Öffnungen (7) aller Gaskanäle (6) in einer Ebene angeordnet sind.

13. Schleppgasdüse (1) nach einem der Ansprüche 1 bis 11, **dadurch gekennzeichnet, dass** die Öffnungen (7) aller Gaskanäle (6) auf einer gekrümmten Fläche angeordnet sind.

## Claims

1. Carrier gas nozzle (1) for supplying a protective gas (G) to a welding region (S), the nozzle comprising a housing (2), a device (3) for fastening to a welding torch (B), an inlet (4) for the protective gas (G), at least one gas distribution chamber (5), and a plurality of gas channels (6) which are arranged in parallel and have openings (7) via which the protective gas (G) flows to the welding region (S), **characterised in that** each gas channel (6) has a height (h_{K}) corresponding to at least six times the hydraulic diameter (dₕ) of the gas channel (6), and **in that** elements (9) for uniformly distributing the flow of the protective gas (G) to all of the gas channels (6) are arranged in the gas channels (6).

2. Carrier gas nozzle (1) according to claim 1, **characterised in that** the gas channels (6) are connected to the at least one gas distribution chamber (5) via holes (8).

3. Carrier gas nozzle (1) according to claim 2, **characterised in that** the holes (8) have a diameter (d_{B}) of between 0.2 mm and 5 mm, in particular between 0.5 mm and 1 mm.

4. Carrier gas nozzle (1) according to any of claims 1 to 3,
**characterised in that** the elements (9) for uniformly distributing the flow of the protective gas (G) are formed by a diffuser (10) which is arranged in a portion of the cross section (A_{K}) of the gas channel (6).

5. Carrier gas nozzle (1) according to any of claims 1 to 4,
**characterised in that** the device (3) for fastening to a welding torch (B) is pivotable.

6. Carrier gas nozzle (1) according to any of claims 1 to 5,
**characterised in that** at least one cooling channel (11) is arranged in the housing (2) between a coolant inlet (12) and a coolant outlet (13).

7. Carrier gas nozzle (1) according to any of claims 1 to 6,
**characterised in that** the housing (2), the inlet (4) for the protective gas (G), the at least one gas distribution chamber (5), the gas channels (6), the elements (9) for uniformly distributing the flow of the protective gas (G) and optionally the cooling channel (11) are produced in one piece and preferably in a 3D printing method.

8. Carrier gas nozzle (1) according to any of claims 1 to 7,
**characterised in that** the housing (2), the inlet (4) for the protective gas (G), the at least one gas distribution chamber (5), the gas channels (6), the elements (9) for uniformly distributing the flow of the protective gas (G) and optionally the cooling channel (11) are produced from an aluminium alloy.

9. Carrier gas nozzle (1) according to any of claims 1 to 8,
**characterised in that** the gas channels (6) have a square or hexagonal cross section (A_{K}).

10. Carrier gas nozzle (1) according to any of claims 1 to 9,
**characterised in that** the housing (2) has a substantially rectangular base surface, and the device (3) for fastening the welding torch (B) is arranged on a broad side of the rectangular housing (2).

11. Carrier gas nozzle (1) according to any of claims 1 to 9,
**characterised in that** the housing (2) has a substantially round or circular-sector-shaped base surface, and the device (3) for fastening the welding torch (B) is arranged substantially in the middle of the housing (2).

12. Carrier gas nozzle (1) according to any of claims 1 to 11,
**characterised in that** the openings (7) of all of the gas channels (6) are arranged in one plane.

13. Carrier gas nozzle (1) according to any of claims 1 to 11,
**characterised in that** the openings (7) of all of the gas channels (6) are arranged on a curved surface.

## Revendications

1. Buse à gaz vecteur (1) pour appliquer un gaz protecteur (G) sur une zone de soudage (S), avec un boîtier (2), un dispositif (3) pour la fixation à une torche de soudage (B), une entrée (4) pour le gaz protecteur (G), au moins un espace de distribution de gaz (5) et une pluralité de canaux à gaz (6) disposés parallèlement avec des ouvertures (7) par lesquelles le gaz protecteur (G) parvient sur la zone de soudage (S), **caractérisée en ce que** chaque canal à gaz (6) présente une hauteur (h_{K}) qui correspond à au moins six fois le diamètre hydraulique (dₕ) du canal à gaz (6), et **en ce que** dans les canaux à gaz (6) sont disposés des éléments (9) pour la distribution uniforme du flux du gaz protecteur (G) sur tous les canaux à gaz (6).

2. Buse à gaz vecteur (1) selon la revendication 1, **caractérisée en ce que** les canaux à gaz (6) sont reliés au au moins un espace de distribution de gaz (5) par l'intermédiaire de trous (8).

3. Buse à gaz vecteur (1) selon la revendication 2, **caractérisée en ce que** les trous (8) présentent un diamètre (d_{B}) entre 0,2 mm et 5 mm, en particulier entre 0,5 mm et 1 mm.

4. Buse à gaz vecteur (1) selon l'une des revendications 1 à 3, **caractérisée en ce que** les éléments (9) pour la distribution uniforme du flux du gaz protecteur (G) sont formés par un diffuseur (10) qui est disposé dans une partie de la section transversale (A_{K}) du canal à gaz (6).

5. Buse à gaz vecteur (1) selon l'une des revendications 1 à 4, **caractérisée en ce que** le dispositif (3) pour la fixation à une torche de soudage (B) peut pivoter.

6. Buse à gaz vecteur (1) selon l'une des revendications 1 à 5, **caractérisée en ce qu'**au moins un canal de refroidissement (11) est disposé dans le boîtier (2) entre une entrée d'agent de refroidissement (12) et une sortie d'agent de refroidissement (13).

7. Buse à gaz vecteur (1) selon l'une des revendications 1 à 6, **caractérisée en ce que** le boîtier (2), l'entrée (4) pour le gaz protecteur (G), le au moins un espace de distribution de gaz (5), les canaux à gaz (6), les éléments (9) pour la distribution uniforme du flux du gaz protecteur (G) et si nécessaire le canal de refroidissement (11) sont fabriqués d'une seule pièce et de préférence dans un procédé d'impression 3D.

8. Buse à gaz vecteur (1) selon l'une des revendications 1 à 7, **caractérisée en ce que** le boîtier (2), l'entrée (4) pour le gaz protecteur (G), le au moins un espace de distribution de gaz (5), les canaux à gaz (6), les éléments (9) pour la distribution uniforme du flux du gaz protecteur (G) et, si nécessaire, le canal de refroidissement (11) sont fabriqués en un alliage d'aluminium.

9. Buse à gaz vecteur (1) selon l'une des revendications 1 à 8, **caractérisée en ce que** les canaux à gaz (6) présentent une section transversale (A_{K}) carrée ou hexagonale.

10. Buse à gaz vecteur (1) selon l'une des revendications 1 à 9, **caractérisée en ce que** le boîtier (2) présente une base sensiblement rectangulaire et le dispositif (3) pour la fixation de la torche de soudage (B) est disposé sur un côté large du boîtier rectangulaire (2).

11. Buse à gaz vecteur (1) selon l'une des revendications 1 à 9, **caractérisée en ce que** le boîtier (2) présente une base sensiblement ronde ou en forme de secteur circulaire et le dispositif (3) pour la fixation de la torche de soudage (B) est disposé sensiblement au milieu du boîtier (2).

12. Buse à gaz vecteur (1) selon l'une des revendications 1 à 11, **caractérisée en ce que** les ouvertures (7) de tous les canaux à gaz (6) sont disposées dans un plan.

13. Buse à gaz vecteur (1) selon l'une des revendications 1 à 11, **caractérisée en ce que** les ouvertures (7) de tous les canaux à gaz (6) sont disposées sur une surface courbe.
